# EUROPEAN PATENT APPLICATION

(11) **EP 3 062 563 A1**
(43) Date of publication of application: **31.08.2016**
(21) Application number: 13897908.3
(22) Date of filing: 21.11.2013
(51) Int. Cl.: H04W 48/18

(54) **NETWORK ACCESS SELECTION METHOD AND TERMINAL**

(71) Applicant: Huawei Technologies Co., Ltd., Longgang District Shenzhen, Guangdong 518129 (CN)
(72) Inventor: LI, Yan, Shenzhen Guangdong 518129 (CN); WU, Wenfu, Shenzhen Guangdong 518129 (CN)
(74) Representative: Körber, Martin Hans
(86) International application number: PCT/CN2013/087580
(87) International publication number: WO 2015/074206

(57) **Abstract**

The present invention provides a network access selection method and terminal, where the method includes: acquiring service attribute information corresponding to a service to be performed; determining, according to the service attribute information and a network access selection policy, a preferred access network used by the service to be performed; and performing the service by using the preferred access network. The present invention enables differentiated access networks to be selected for services with different service attributes and makes it easy to implement a network access selection.

## Description

### TECHNICAL FIELD

The present invention relates to the field of communications technologies, and in particular, to a network access selection method and terminal.

### BACKGROUND

To meet a user's requirement for Internet access at anytime anywhere, mobile operators have deployed a large quantity of wireless base stations, so that a terminal implements Internet access by using the wireless base stations. In addition, because spectrum resources of the mobile operators are limited, access bandwidth provided by the wireless base stations is limited, and the bandwidth is shared by all users under a same wireless base station. If a large number of users served by a base station are accessing the Internet simultaneously, actual bandwidth for each user is very low or even too low to implement a service. Therefore, operators deploy wireless local area network (wireless local area network, WLAN for short) access in hotspot areas, so that users can access the Internet by using the WLAN, and a purpose of reducing pressure on the wireless base stations is achieved. To this end, the operators deploy various access networks, from which a terminal may select one to access the Internet.

However, different access networks have different service levels. For example, compared with 3G/4G access, WLAN access has advantages of higher bandwidth and lower access fees. For downloading of large files or videos that do not require quality of service (quality of service, QoS for short) to be guaranteed, the WLAN access is more suitable. However, WLAN access cannot implement a service requiring a QoS guarantee such as a real-time communication service because it does not support mobility and provides unstable access bandwidth and lower security. In the prior art, to solve a problem that services with different requirements need different access networks, the 3rd Generation Partnership Project (3rd Generation Partnership Project, 3GPP for short), an organization of standardization defines an access network discovery and selection function (access network discovery and selection function, ANDSF for short) entity, which stores an access network selection policy. A terminal may acquire the foregoing policy from the entity after accessing a packet data network, and select a corresponding access network for a service according to the policy.

However, a selection policy configured in the ANDSF in the prior art generally makes a distinction only according to a service type. For example, a video on demand service prefers the WLAN access, and a real-time communication service prefers the 3G/4G access. Therefore, the following problem is caused: In practice, even different services of a same service type may have different service level requirements. Take the video on demand service as an example. Most free video on demand services do not require a reliable QoS guarantee and may prefer the WLAN access; but for some charging video on demand services, because a user has made a payment, a reliable QoS guarantee is required. As a result, the foregoing requirement cannot be met if the ANDSF only provides that the video on demand service prefers a WLAN. Therefore, a current access network selection solution cannot meet service use requirements. Particularly, that an access network selection policy is configured for each service separately will cause policy configuration to be extremely complex.

### SUMMARY

Embodiments of the present invention provide a network access selection method and terminal to implement differentiated processing of different services, in which implementation manners are simple and use requirements of the services are properly met.

According to a first aspect, a network access selection method is provided, including:
acquiring service attribute information corresponding to a service to be performed;
determining, according to the service attribute information and a network access selection policy, a preferred access network used by the service to be performed; and
performing the service by using the preferred access network.

With reference to the first aspect, in a first possible implementation manner, the network access selection policy includes: the service attribute information and the preferred access network corresponding to the service attribute information; and
the determining, according to the service attribute information and a network access selection policy, a preferred access network used by the service to be performed specifically includes:
determining, according to the service attribute information, the preferred access network corresponding to the service attribute information.

With reference to the first aspect and the first possible implementation manner, in a second optional implementation manner, the acquiring service attribute information corresponding to a service to be performed includes:
receiving a service link which is used to link the service and sent by an application server that is used to provide the service, where the service link includes the service attribute information; and
when it is detected that the service link is triggered, parsing the service link to obtain the service attribute information.

With reference to the first aspect and the foregoing possible implementation manners, in a third optional implementation manner, the service attribute information includes at least one of the following:
a quality of service guarantee requirement, a mobility requirement, information about required service traffic, and an access mode preference.

With reference to the first aspect and the foregoing third possible implementation manner, in a fourth optional implementation manner, the network access selection policy further includes at least one of the following: current accounting status information of a user and network status information.

With reference to the first aspect and the first possible implementation manner, in a fifth optional implementation manner, before the determining, according to the service attribute information and a network access selection policy, a preferred access network, the method further includes:
pre-configuring and storing the network access selection policy.

With reference to the first aspect and the first possible implementation manner, in a sixth optional implementation manner, before the determining, according to the service attribute information and a network access selection policy, a preferred access network, the method further includes:
interacting with an access network discovery and selection function entity or a capability enabling platform to acquire the network access selection policy.

With reference to the first aspect and the first possible implementation manner, in a seventh optional implementation manner, after the determining a preferred access network used by the service to be performed, the method further includes:
displaying selection prompt information if it is determined that the preferred access network is unavailable currently, where the selection prompt information is used to prompt a user of the service to choose whether to still use the preferred access network.

With reference to the first aspect and the seventh optional implementation manner, in an eighth optional implementation manner, after the displaying selection prompt information, the method further includes:
if the user of the service chooses to still use the preferred access network, waiting until the preferred access network is available and then executing the performing the service by using the preferred access network.

With reference to the first aspect and the first optional implementation manner, in a ninth optional implementation manner, before the performing the service by using the preferred access network, the method further includes:
interacting with an access network discovery and selection function entity or a capability enabling platform to acquire network information of the preferred access network; and
accessing the preferred access network according to the network information.

With reference to the first aspect and the first optional implementation manner, in a tenth optional implementation manner, after the determining a preferred access network used by the service to be performed, the method further includes:
if a connection to the preferred access network already exists, executing the performing the service by using the preferred access network; and
if the connection to the preferred access network does not exist, first establishing a connection to the preferred access network and then performing the service by using the preferred access network.

According to a second aspect, a terminal is provided, including:
an information acquiring unit, configured to acquire service attribute information corresponding to a service to be performed;
a network selecting unit, configured to determine, according to the service attribute information and a network access selection policy, a preferred access network used by the service to be performed; and a service executing unit, configured to perform the service by using the preferred access network.

With reference to the second aspect, in a first optional implementation manner, the network access selection policy includes: the service attribute information and the preferred access network corresponding to the service attribute information; and
the network selecting unit is specifically configured to:
according to the network access selection policy and the service attribute information, determine the preferred access network corresponding to the service attribute information.

With reference to the second aspect and the first optional implementation manner, in a second optional implementation manner, the information acquiring unit includes:
a receiving subunit, configured to receive a service link which is used to link the service and sent by an application server that is used to provide the service, where the service link includes the service attribute information; and
a parsing subunit, configured to: when it is detected that the service link is triggered, parse the service link to obtain the service attribute information.

With reference to the second aspect and the foregoing possible implementation manners, in a third optional implementation manner, the service attribute information acquired by the information acquiring unit includes at least one of the following: a quality of service guarantee requirement, a mobility requirement, information about required service traffic, and an access mode preference.

With reference to the second aspect and the foregoing third optional implementation manner, in a fourth optional implementation manner, the network access selection policy further includes at least one of the following: current accounting status information of a user and network status information.

With reference to the second aspect and the first optional implementation manner, in a fifth optional implementation manner, the terminal further includes:
a policy configuring unit, configured to pre-configure and store the network access selection policy.

With reference to the second aspect and the first optional implementation manner, in a sixth optional implementation manner, the terminal further includes:
a policy acquiring unit, configured to interact with an access network discovery and selection function entity or a capability enabling platform to acquire the network access selection policy.

With reference to the second aspect and the first optional implementation manner, in a seventh optional implementation manner, the terminal further includes:
a selection prompting unit, configured to display selection prompt information if it is determined that the preferred access network is unavailable currently, where the selection prompt information is used to prompt a user of the service to choose whether to still use the preferred access network.

With reference to the second aspect and the seventh optional implementation manner, in an eighth optional implementation manner,
the network selecting unit is further configured to: if the user of the service chooses to still use the preferred access network, wait until the preferred access network is available and then instruct the service executing unit to perform the service by using the preferred access network.

With reference to the second aspect and the first optional implementation manner, in a ninth optional implementation manner, the terminal further includes:
a network access unit, configured to interact with an access network discovery and selection function entity or a capability enabling platform to acquire network information of the preferred access network; and access the preferred access network according to the network information.

With reference to the second aspect and the first optional implementation manner, in a tenth optional implementation manner, the service executing unit is specifically configured to: after the determining a preferred access network used by the service to be performed, if a connection to the preferred access network already exists, execute the performing the service by using the preferred access network; and further configured to, when the connection to the preferred access network does not exist, first establish a connection to the preferred access network and then perform the service by using the preferred access network.

Technical effects of a network access selection method and terminal provided in the embodiments of the present invention are as follows: A preferred access network corresponding to a service is acquired according to service attribute information, so that a differentiated access network selection can be performed for services with different service attributes; in addition, instead of individually setting a policy for each service, the selection policy makes a distinction only according to the service attribute information, which makes it easy to implement a network access selection.

### BRIEF DESCRIPTION OF DRAWINGS

FIG. 1 is a schematic flowchart of an embodiment of a network access selection method according to the present invention;
FIG. 2 is a schematic signaling diagram of another embodiment of a network access selection method according to the present invention;
FIG. 3 is a schematic signaling diagram of yet another embodiment of a network access selection method according to the present invention;
FIG. 4A and FIG. 4B is a schematic signaling diagram of yet another embodiment of a network access selection method according to the present invention;
FIG. 5 is a schematic signaling diagram of yet another embodiment of a network access selection method according to the present invention;
FIG. 6 is a schematic structural diagram of an embodiment of a terminal according to the present invention;
FIG. 7 is a schematic structural diagram of another embodiment of the terminal according to the present invention; and
FIG. 8 is a schematic structural diagram of another embodiment of the terminal according to the present invention.

### DESCRIPTION OF EMBODIMENTS

### Embodiment 1

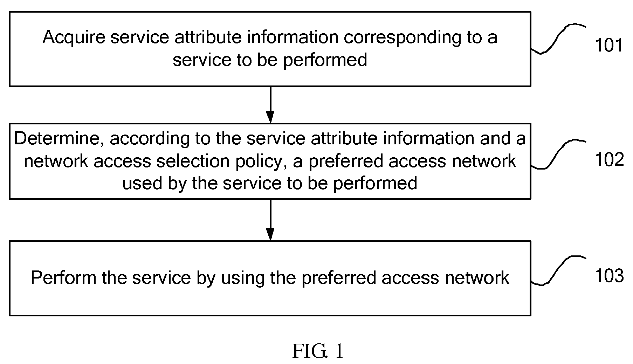

FIG. 1 is a schematic flowchart of an embodiment of a network access selection method according to the present invention. For example, this embodiment is executed by a terminal. As shown in FIG. 1, the method may include:
101. Acquire service attribute information corresponding to a service to be performed.
   The service to be performed is a service to be used by a user. For example, the service attribute information may include at least one of the following: a quality of service guarantee requirement, a mobility requirement, information about required service traffic, an access mode preference, and the like. Certainly, a requirement of another aspect may further be included, and these several kinds are only exemplary.
   A video website is used as an example. It is assumed that the terminal acquires a page of the video website from an application server, and the video website includes links to various videos, such as a link to a free video A and a link to a charging video B. A user can watch a desired video by clicking a corresponding link. Then, when the user clicks the link to the free video A, the free video A is the service to be performed, that is, the user currently wants to watch the free video A. In addition, the foregoing service link, such as the link to the free video A, further includes service attribute information corresponding to the free video A, where the service attribute information is together delivered when the application server sends the page of the video website to the terminal; when the terminal detects that the service link is triggered, for example, when the user clicks the link to the free video A, it indicates that the user wants to perform the service, and then the terminal can obtain, by parsing the service link, the service attribute information included in the service link, where, for example, the service attribute information is that a QoS guarantee is required.
102. Determine, according to the service attribute information and a network access selection policy, a preferred access network used by the service to be performed.
   Optionally, the network access selection policy includes: the service attribute information and the preferred access network corresponding to the service attribute information.
   Correspondingly, the foregoing step 102 may specifically include: determining, according to the service attribute information, the preferred access network corresponding to the service attribute information.
   For example, the service attribute information may include one or more of the following: the QoS guarantee requirement, the mobility requirement, the information about required service traffic, the access mode preference, and the like. Certainly, in addition to at least one piece of the foregoing information, the service attribute information may include a service type.
   That the service attribute information includes the QoS guarantee requirement and the service type is used as an example, and the policy may be as follows: If the service type is a video service and requires a QoS guarantee, a preferred access network corresponding to the service is 3G access; and if the service type is a video service and does not require a QoS guarantee, the preferred access network corresponding to the service is WLAN access. The foregoing is merely an example. In a specific implementation, the service attribute information may also include information about another aspect. The preferred access network may also be set according to another rule.
   Optionally, in the network access selection policy, in addition to the service attribute information, other information may also be combined to determine the preferred access network of the service. For example, current accounting status information of the user (for example, whether a fee balance is sufficient), and network status information (for example, whether a network is congested) may be combined; certainly, other information may also be included.
   Further, the network access selection policy according to which the terminal selects an access network may be pre-configured and stored in the terminal, or may be a default policy in the terminal, or may also be acquired when the terminal interacts with an ANDSF of an operator or a capability enabling platform of an operator, in which manner the policy is actually provided by the operator.
103. Perform the service by using the preferred access network.

Before performing the service by using the preferred access network selected in the step 102, the terminal may first acquire network information of the preferred access network, so as to access the preferred access network according to the network information; and an access mode of the network information may be acquired when the terminal interacts with the ANDSF of the operator or the capability enabling platform of the operator. For example, if the selected preferred access network is the WLAN access, the network information which may be acquired by the terminal is a service set identifier (service set identifier, SSID for short) corresponding to the WLAN, and the terminal accesses the preferred access network according to the SSID. Further, a case that possibly occurs is as follows: Though the preferred access network is selected, the network may be unavailable; under such a circumstance, the terminal may display selection prompt information, where the selection prompt information is used to prompt the user of the service to choose whether to still use the preferred access network. If the user of the service chooses to still use the preferred access network, the terminal waits until the preferred access network is available and then executes the performing the service by using the preferred access network. Alternatively, after the preferred access network used by the service to be performed is determined, and if a connection to the preferred access network already exists, the service is performed by using the preferred access network; and if the connection to the preferred access network does not exist, first a connection to the preferred access network is established, and then the service is performed by using the preferred access network.

According to a network access selection method in this embodiment, a preferred access network corresponding to a service is acquired according to service attribute information, so that a differentiated access network selection can be performed for services with different service attributes; in addition, instead of individually setting a policy for each service, the selection policy makes a distinction only according to the service attribute information, which makes it easy to implement a network access selection and meets use requirements of different services.

Several specific examples are used to describe in detail the network access selection method in this embodiment of the present invention.

### Embodiment 2

In this embodiment, an example, in which an application server provides a charging video on demand and a free video on demand, is used. For a free video, the application server requires a network to provide only best-effort transmission quality; however, for a charging video, because a user has been charged and the application server has signed a protocol with a mobile network operator, the charging video is provided with transmission quality with a QoS guarantee.

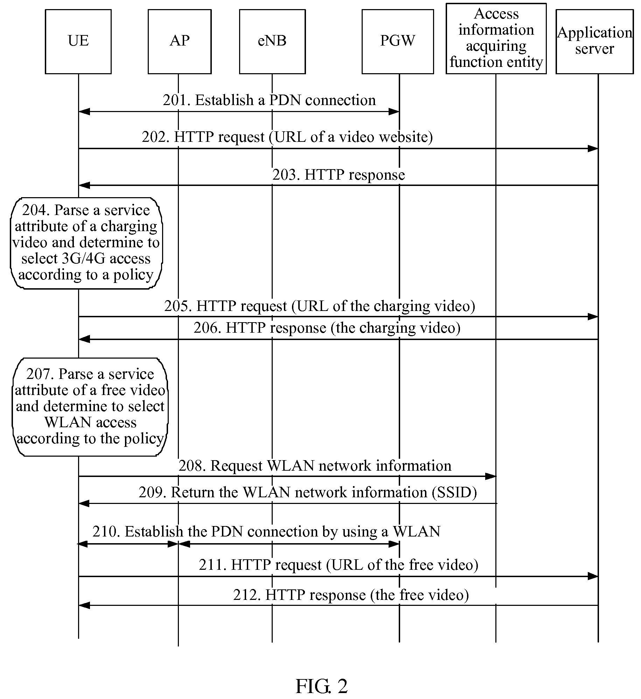

FIG. 2 is a schematic signaling diagram of another embodiment of a network access selection method according to the present invention. As shown in FIG. 2, the method may include:
201. A terminal establishes a packet data network connection.
   The terminal establishes the packet data network (packet data network, PDN for short) connection to a packet data network gateway (PDN Gateway, PGW for short) by using 4G access, where the PGW assigns an IP address for the terminal.
202. The terminal sends an HTTP request to the application server to request a page of a video website.
   A website address (uniform resource locator, URL for short) of the video website may be carried in the HTTP request.
203. The application server returns an HTTP response to the terminal.
   The video website in this embodiment provides both a charging video file and a free video file, where the charging video requires the QoS guarantee, and a protocol has been signed with the mobile network operator to guarantee transmission quality of this kind of video; and for the free video, there is no QoS requirement for the network. In this embodiment, an HTML page of the video website which is returned by the HTTP response may include the following content:

   ```
          <video id= "movie 1" >
          <source src="XXX.mp4" type='video/mp4; QoS guaranteed =true />
          </video>
          <video id="movie 2" >
          <source src="YYY.mp4" type='video/mp4; />
          </video>
```

   where, movie 1 is the charging video which requires the QoS guarantee. In this embodiment, it is implemented in a manner of newly adding an attribute to an HTML label <video>, that is, the foregoing QoS guaranteed =true is used to indicate that movie 1 requires the QoS guarantee.
204. A user selects a link to a charging video, and the terminal parses a service attribute and selects 3G/4G access according to a network access selection policy.
   After receiving the HTTP response, the terminal displays the video website on a screen. As described in the foregoing, on the video website, a service link to the charging video and a service link to the free video are provided, where the service links include service attribute information, for example, a link to the foregoing movie 1 includes QoS guaranteed =true. The video website may be displayed on a terminal browser.
   When the user clicks the link to the charging video on the website, the terminal browser detects that the service link to the charging video is triggered, which indicates that the user wants to watch the charging video. Then the terminal (such as a browser) parses the service link to obtain the service attribute information, for example, information such as the foregoing type='video/mp4 and QoS guaranteed =true may be obtained; and determines that the charging video is a video service and requires the QoS guarantee.
   In this case, the terminal determines, according to a local network access selection policy and the service attribute information obtained after parsing, that a preferred access network of the charging video is 3G/4G so as to guarantee the QoS guarantee. For example, the network access selection policy may include the following: For a video type service which requires the QoS guarantee, the preferred access network is the 3G/4G; and for a video type service which does not require the QoS guarantee, the preferred access network is a WLAN. In this embodiment, the policy may be configured by the user and stored in the terminal browser, or may be a default policy embedded in the browser.
205. The terminal sends an HTTP request to the application server to request service data of the charging video, where the HTTP request may carry a URL corresponding to the charging video.
   Because the terminal has accessed a 4G network, the terminal may directly send the HTTP request.
206. The application server returns an HTTP response to the terminal, where the HTTP response carries the service data of the charging video.
   Because the charging video is watched via 4G, phenomena including stalling, jumping, and the like do not occur when the user watches the video.
207. The user selects a link to a free video, and the terminal parses a service attribute and selects WLAN access according to the network access selection policy.
   When the user clicks the link to the free video on the website, the terminal browser detects that the service link to the free video is triggered, which indicates that the user wants to watch the free video. Then the terminal (such as the browser) parses the service link to obtain the service attribute information; and determines that the free video is a video service and does not require the QoS guarantee. In this case, the terminal determines, according to the local network access selection policy and the service attribute information obtained after parsing, that a preferred access network of the free video is the WLAN.
208. The terminal requests network information of a WLAN access network from an access information acquiring function entity.
   In this case, if the terminal has not acquired WLAN access information, the browser may invoke a system API (application programming interface) of a mobile phone itself, and interact with the access information acquiring function entity of the mobile network operator by using the API to acquire current WLAN access network information. In this step, the terminal may send location information of the terminal to the access information acquiring function entity, so that the entity returns WLAN information corresponding to the location information.
   Optionally, for example, the access information acquiring function entity may be an ANDSF function entity or an independent capability enabling platform of a network operator, where the capability enabling platform interacts with the ANDSF.
209. The access information acquiring function entity returns WLAN network information in proximity of the terminal, such as an SSID.
210. The terminal accesses the packet data network by using the WLAN, so as to establish a PDN connection.
   The terminal browser may invoke the system API of the terminal itself according to returned WLAN information such as the SSID, enables a WLAN interface, and accesses the packet data network by using a WLAN access technology, so as to establish the PDN connection, where an IP address which is the same as or different from that used during the 4G access may be assigned for the connection.
211. The terminal sends an HTTP request to the application server by using the WLAN to request service data of the free video, where the HTTP request may carry a URL corresponding to the free video.
212. The application server returns an HTTP response to the terminal, where the HTTP response carries the service data of the free video.

### Embodiment 3

In this embodiment, an example, in which an application server provides a WEB-based real-time communication service, is used. For most real-time communication services, a video/audio call is provided, so that session continuity is required, that is, it is required to prevent a call from being interrupted when a user moves. Because WLAN access does not provide mobility support, 3G/4G access is preferred in most real-time communication services. However, some applications provide a point-to-point file transfer service by using only a WEB real-time communication service mechanism, and support resumable data transfer; and therefore mobility is not required, and the higher transmission bandwidth the better. For this kind of real-time communication service, the WLAN access is preferred.

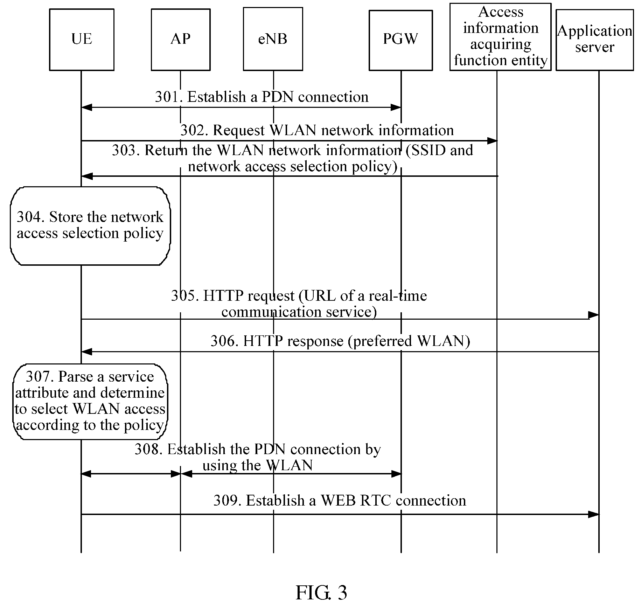

FIG. 3 is a schematic signaling diagram of yet another embodiment of a network access selection method according to the present invention. As shown in FIG. 3, the method may include:
301. A terminal establishes a packet data network connection.
   The terminal establishes the packet data network connection by using 4G access, and a PGW assigns an IP address for the terminal.
302. The terminal requests network information of a WLAN access network from an access information acquiring function entity.
   What is different from the foregoing embodiment is as follows: After being started, a terminal browser in this embodiment may immediately invoke a system API to acquire current WLAN access network information, instead of acquiring the WLAN access network information after service attribute information is parsed and a preferred access network is determined.
   Optionally, for example, the access information acquiring function entity may be an ANDSF function entity or an independent capability enabling platform of a network operator, where the capability enabling platform interacts with the ANDSF.
303. The access information acquiring function entity returns WLAN network information in proximity of the terminal.
   For example, the WLAN network information returned by the access information acquiring function entity may be an SSID and the like.
   In addition, the access information acquiring function entity in this embodiment further returns a network access selection policy to the terminal. For example, for a WEB real-time communication service, 3G/4G access is preferred; and meanwhile, the preferred access network is determined by further combining and considering an access mode preference of the service itself. That is, the policy in this embodiment is provided by a mobile network operator for the terminal.
304. The terminal stores a network access selection policy.
   In this step, for the purpose of subsequent use, the terminal stores the policy received from the access information acquiring function entity.
305. The terminal sends an HTTP request to an application server to request a page of a WEB real-time communication service, where the HTTP request may carry a URL of the service.
306. The application server returns an HTTP response to the terminal.
   For example, an HTML page of the real-time communication service is returned in the response, where the page includes WEB real-time communication information such as an address of a communication peer. In this embodiment, that point-to-point file transfer is performed by using a WEB real-time communication mechanism is used as an example. Therefore, indication information of the access mode preference "WLAN access preferred" of the service is added to service attribute information of the WEB real-time communication service.
307. The terminal parses the HTTP response to obtain service attribute information, and learns that the service is WEB real-time communication and prefers a WLAN.
   After the terminal browser receives the HTTP response, the browser parses an attribute of the service link and finds that the service is a WEB real-time communication service; in addition, the access mode preference of the service itself is the WLAN access; and then it is determined that the preferred access network of the real-time communication service is the WLAN.
   It should be noted that, which one of the policy stored in the browser and the access mode preference of the service itself in the service attribute information is used to determine the preferred access network of a service may specifically be set in a specific implementation. For example, it may be set that when the policy conflicts with the access mode preference of the service, the access mode preference prevails, and the setting is used as a part of the policy; certainly, there may also be another criterion.
308. The terminal accesses the packet data network by using the WLAN.
   The terminal establishes a PDN connection by using access information of the WLAN, such as the SSID, which is obtained in the step 303, where an IP address which is the same as or different from that used in 4G access may be assigned for the connection.
309. The terminal and the application server establish a web real-time communication (Web Real-Time Communication, WEBRTC for short) connection and start to perform the real-time communication service.

### Embodiment 4

In this embodiment, in a network access selection policy, other information may further be combined, for example, current accounting status information of a user and network status information (such as whether network congestion occurs) may be combined. For example, when a 3G/4G network is congested, a non-real-time type video service prefers WLAN access.

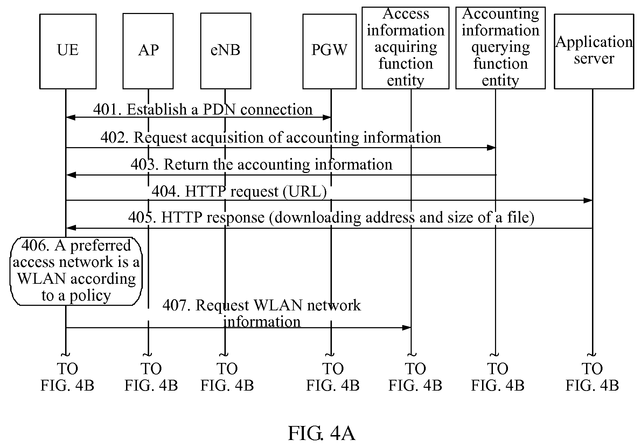

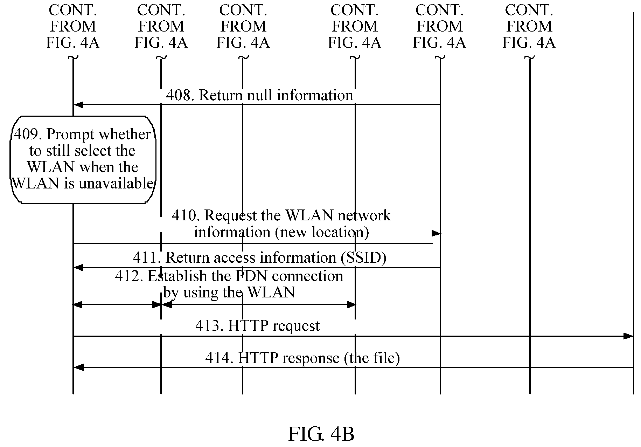

FIG. 4A and FIG. 4B is a schematic signaling diagram of yet another embodiment of a network access selection method according to the present invention. As shown in FIG. 4A and FIG. 4B, the method may include:
401. A terminal establishes a packet data network connection.
402. The terminal requests acquisition of current accounting information of an end user from an accounting information query function entity.
   After being started, a terminal browser may acquire the current accounting information of the user from the accounting information query function entity of an operator, where the accounting information query function entity, which is the same as an access information acquiring function entity, may be independently deployed or may be provided by a unified capability enabling platform.
403. The accounting information query function entity returns the current accounting information of the user to the terminal.
   For example, user package traffic, currently used traffic, and the like may be included.
404. The terminal sends an HTTP request to an application server, where the HTTP request includes a URL of a file to be downloaded.
405. The application server returns an HTTP response to the terminal, where the HTTP response carries a download address of the file and a size of the file.
   The application server feeds back service attribute information, which indicates the size of the file, to the terminal.
406. The terminal determines that a preferred access network is a WLAN according to a network access selection policy.
   The terminal acquires the accounting information returned in the step 403, and information about the size of the file returned in the step 405. When the user clicks a URL link address for downloading the file to request downloading of the file, the browser parses the link to obtain a corresponding size of the file.
   The network access selection policy of the terminal may be as follows: When an accounting quota is sufficient (for example, the used traffic is less than 80% of the user package traffic), downloading of a file smaller than 1 M prefers a current access technology, and downloading of a file greater than 1 M prefers the WLAN access. When the accounting quota is insufficient, the WLAN access is preferred despite a size of a file to be downloaded. According to the policy in this embodiment, because the accounting information returned in the step 403 is that the accounting quota is insufficient, the browser prefers the WLAN despite the size of the file to be downloaded.
407. The terminal requests acquisition of access network information from an access information acquiring function entity.
   The browser invokes a system API of the terminal itself and interacts with the access information acquiring function entity of the operator to acquire current WLAN access network information.
408. The access information acquiring function entity returns null information to the terminal.
   No WLAN network is accessible in proximity of a location of the terminal in this embodiment, so that the access information acquiring function entity returns the null information.
409. The terminal displays selection prompt information to the user, where the selection prompt information is used to prompt a user of the service to choose whether to still use the WLAN.
   The browser may prompt the user that current preferred access network information is unavailable. For example, a window may pop up on a WEB interface to prompt the user that the user may choose to use the current access technology to continue the downloading or may choose to wait and continue the downloading when the WLAN is available. In this embodiment, it is assumed that the user chooses to still use the preferred access network WLAN.
410. The terminal requests acquisition of the access network information from the access information acquiring function entity for another time.
   If the user chooses to wait and download the file when the WLAN is available, the browser buffers the downloading address URL of the file and traces a location change of a user terminal by using the system API. When the location of the terminal changes, for example, the terminal enters a new wireless cellular cell, the browser queries whether the WLAN access is available at a current location from the access information acquiring function entity of the operator, where new location information of the terminal is carried.
411. The access information acquiring function entity returns WLAN access information, for example, an SSID, to the terminal.
412. The terminal accesses the packet data network by using the WLAN.
   The terminal invokes the system API of the terminal itself according to the WLAN access information returned by the access information acquiring function entity, enables a WLAN interface, and accesses the packet data network by using a WLAN access technology.
413. The terminal browser sends a download link of the file by using the WLAN access, where the link is cached by HTTP.
414. The application server returns an HTTP response to the terminal and sends the file downloaded by the terminal.

### Embodiment 5

The terminals in the foregoing embodiments all access a packet data network such as 3G/4G at a moment by using one access technology. However, a terminal in this embodiment may support multiple access, that is, multiple access technologies may be used at the same time to access the packet data network. Under such a circumstance, if a browser finds, according to service attribute information, that a preferred access network is not consistent with an access mode by which an HTTP connection is currently initiated, the browser may directly transmit a service on the preferred access network and in another access mode, without a need to initiate an access process additionally.

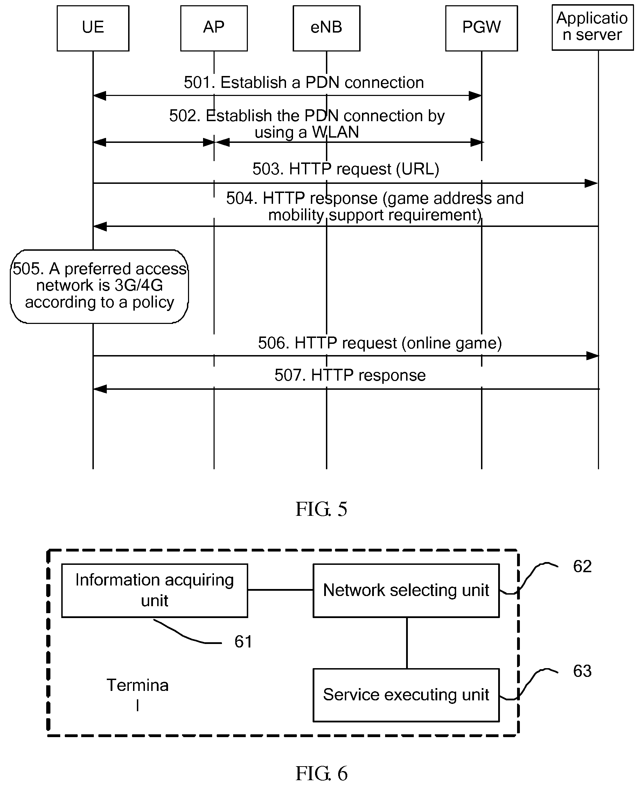

FIG. 5 is a schematic signaling diagram of yet another embodiment of a network access selection method according to the present invention. As shown in FIG. 5, the method may include:
501. A terminal establishes a packet data network connection by using 4G access, where an IP address is assigned for the connection.
502. The terminal accesses a packet data network by using a WLAN.
   The terminal in this embodiment has a capability to connect to multiple access technologies at the same time, and accesses the packet data network by using the WLAN. A PGW may assign an IP address which is the same as or different from that in the step 501 to the connection.
503. The terminal sends an HTTP request to an application server, where the HTTP request carries a URL of a requested service page.
   Because in this case the terminal has not acquired service attribute information, a browser may select an access technology according to a default policy. For example, in this embodiment, WLAN access is selected to initiate a request. It is assumed that a service requested in this embodiment is a page of an online game.
504. The application server returns an HTTP response to the terminal, where the HTTP response carries a service link URL of an online game, and in addition, service attribute information corresponding to the online game includes a mobility requirement.
   The mobility requirement refers to that when a user moves, transmission cannot be interrupted for a long time; otherwise the game is caused to be offline.
505. The terminal selects 3G/4G access according to a policy.
   Because the WLAN access does not support mobility but the service attribute information of the online game service includes the mobility requirement, the terminal determines that a preferred access network is 3G/4G according to a network access selection policy (a mobility support factor carried in the service attribute information needs to be considered in the policy).
506. The terminal sends an HTTP request to the application server by using the 4G.
   The terminal has accessed the 4G, and therefore the HTTP request is directly sent to the application server by using the 4G, where the HTTP request includes an address URL of the online game.
507. The application server returns an HTTP response to the terminal, where the HTTP response includes content of the online game; and an end user plays the online game.

### Embodiment 6

FIG. 6 is a schematic structural diagram of an embodiment of a terminal according to the present invention. The terminal may execute a method in any embodiment of the present invention. As shown in FIG. 6, the terminal may include: an information acquiring unit 61, a network selecting unit 62, and a service executing unit 63, where:
the information acquiring unit 61 is configured to acquire service attribute information corresponding to a service to be performed;
the network selecting unit 62 is configured to determine, according to the service attribute information and a network access selection policy, a preferred access network used by the service to be performed; and
the service executing unit 63 is configured to perform the service by using the preferred access network.

Optionally, the network access selection policy includes: the service attribute information and the preferred access network corresponding to the service attribute information.

Correspondingly, the network selecting unit 62 is specifically configured to determine, according to the service attribute information, the preferred access network corresponding to the service attribute information.

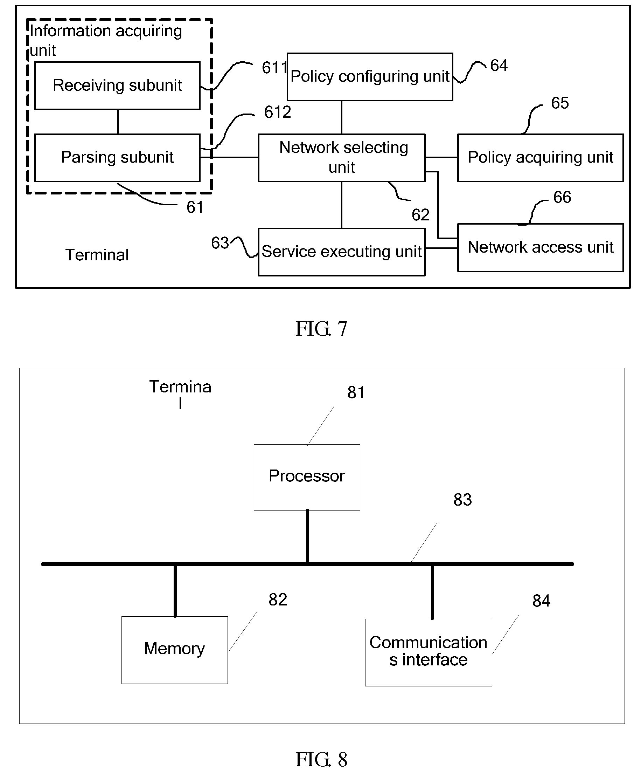

FIG. 7 is a schematic structural diagram of another embodiment of the terminal according to the present invention. As shown in FIG. 7, the information acquiring unit 61 may include: a receiving subunit 611 and a parsing subunit 612, where:
the receiving subunit 611 is configured to receive a service link which is used to link the service and sent by an application server that is used to provide the service, where the service link includes the service attribute information; and
the parsing subunit 612 is configured to: when it is detected that the service link is triggered, parse the service link to obtain the service attribute information.

Further, the service attribute information acquired by the information acquiring unit includes at least one of the following: a quality of service guarantee requirement, a mobility requirement, information about required service traffic, and an access mode preference. In addition, the network access selection policy further includes at least one of the following: current accounting status information of a user and network status information.

Further, the terminal may further include: a policy configuring unit 64, configured to pre-configure and store the network access selection policy.

Further, the terminal may further include: a policy acquiring unit 65, configured to interact with an access network discovery and selection function entity or a capability enabling platform to acquire the network access selection policy.

Further, the network selecting unit 62 is further configured to: if a user of the service chooses to still use the preferred access network, wait until the preferred access network is available and then instruct the service executing unit to perform the service by using the preferred access network.

Further, the terminal may further include: a network access unit 66, configured to interact with the access network discovery and selection function entity or the capability enabling platform to acquire network information of the preferred access network, and access the preferred access network according to the network information.

Further, the service executing unit 63 of the terminal is specifically configured to: after the determining a preferred access network used by the service to be performed, if a connection to the preferred access network already exists, execute the performing the service by using the preferred access network; and further configured to: when the connection to the preferred access network does not exist, first establish a connection to the preferred access network and then perform the service by using the preferred access network.

The foregoing terminal may acquire, according to service attribute information, a preferred access network corresponding to a service, so that a differentiated access network selection can be performed for services with different service attributes; in addition, instead of individually setting a policy for each service, the selection policy makes a distinction only according to the service attribute information, which makes it easy to implement a network access selection.

### Embodiment 7

FIG. 8 is a schematic structural diagram of another embodiment of a terminal according to the present invention. The terminal may execute a method in any embodiment of the present invention. As shown in FIG. 8, the terminal may include: a processor 81, a memory 82, a bus 83, and a communications interface 84, where the processor 81 may be connected to the memory 82 by using the bus 83, the memory 82 is configured to store an instruction, and the processor 81 executes the instruction, which specifically includes:
acquiring service attribute information corresponding to a service to be performed;
determining, according to the service attribute information and a network access selection policy, a preferred access network used by the service to be performed; and
performing the service by using the preferred access network.

For example, the network access selection policy includes: the service attribute information and the preferred access network corresponding to the service attribute information. Correspondingly, the processor 81 may determine, according to the service attribute information, the preferred access network corresponding to the service attribute information.

In a specific application scenario, acquiring, by the processor 81, service attribute information corresponding to a service to be performed may specifically include:
receiving a service link which is used to link the service and sent by an application server that is used to provide the service, where the service link includes the service attribute information; and
when it is detected that the service link is triggered, parsing the service link to obtain the service attribute information.

For example, the foregoing service attribute information includes at least one of the following:
a quality of service guarantee requirement, a mobility requirement, information about required service traffic, and an access mode preference.

Optionally, the network access selection policy further includes at least one of the following: current accounting status information of a user and network status information.

In another optional application scenario, before determining the preferred access network according to the service attribute information and the network access selection policy, the processor 81 further needs to pre-configure and store the network access selection policy.

In a third optional application scenario, before determining the preferred access network according to the service attribute information and the network access selection policy, the processor 81 may further interact with an access network discovery and selection function entity or a capability enabling platform to acquire the network access selection policy.

In a fourth optional application scenario, after the determining a preferred access network used by the service to be performed, the processor 81 may further include:
displaying selection prompt information if it is determined that the preferred access network is unavailable currently, where the selection prompt information is used to prompt a user of the service to choose whether to still use the preferred access network.

In a fifth optional application scenario, after the displaying selection prompt information, the processor 81 may further include:
if a user of the service chooses to still use the preferred access network, waiting until the preferred access network is available and then executing the performing the service by using the preferred access network.

In a sixth optional application scenario, before the performing the service by using the preferred access network, the processor 81 further needs to interact with an access network discovery and selection function entity or a capability enabling platform to acquire network information of the preferred access network, and
access the preferred access network according to the network information.

In a seventh optional application scenario, after the determining a preferred access network used by the service to be performed, the processor 81 further includes:
if a connection to the preferred access network already exists, executing the performing the service by using the preferred access network; and
if the connection to the preferred access network does not exist, first establishing a connection to the preferred access network and then performing the service by using the preferred access network.

The foregoing terminal may acquire, according to service attribute information, a preferred access network corresponding to a service, so that a differentiated access network selection can be performed for services with different service attributes; in addition, instead of individually setting a policy for each service, the selection policy makes a distinction only according to the service attribute information, which makes it easy to implement a network access selection.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes any medium that can store program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A network access selection method, comprising:
acquiring service attribute information corresponding to a service to be performed;
determining, according to the service attribute information and a network access selection policy, a preferred access network used by the service to be performed; and
performing the service by using the preferred access network.

2. The method according to claim 1, wherein:
the network access selection policy comprises: the service attribute information and the preferred access network corresponding to the service attribute information; and
the determining, according to the service attribute information and a network access selection policy, a preferred access network used by the service to be performed specifically comprises:
determining, according to the service attribute information, the preferred access network corresponding to the service attribute information.

3. The method according to claim 1 or 2, wherein the acquiring service attribute information corresponding to a service to be performed comprises:
receiving a service link which is used to link the service and sent by an application server that is used to provide the service, wherein the service link comprises the service attribute information; and
when it is detected that the service link is triggered, parsing the service link to obtain the service attribute information.

4. The method according to claim 1, 2, or 3, wherein the service attribute information comprises at least one of the following:
a quality of service guarantee requirement, a mobility requirement, information about required service traffic, and an access mode preference.

5. The method according to claim 4, wherein the network access selection policy further comprises at least one of the following: current accounting status information of a user, and network status information.

6. The method according to claim 1 or 2, before the determining, according to the service attribute information and a network access selection policy, a preferred access network, further comprising:
pre-configuring and storing the network access selection policy.

7. The method according to claim 1 or 2, before the determining, according to the service attribute information and a network access selection policy, a preferred access network, further comprising:
interacting with an access network discovery and selection function entity or a capability enabling platform to acquire the network access selection policy.

8. The method according to claim 1 or 2, after the determining a preferred access network used by the service to be performed, further comprising:
displaying selection prompt information if it is determined that the preferred access network is unavailable currently, wherein the selection prompt information is used to prompt a user of the service to choose whether to still use the preferred access network.

9. The method according to claim 8, after the displaying selection prompt information, further comprising:
if the user of the service chooses to still use the preferred access network, waiting until the preferred access network is available and then executing the performing the service by using the preferred access network.

10. The method according to claim 1 or 2, before the performing the service by using the preferred access network, further comprising:
interacting with an access network discovery and selection function entity or a capability enabling platform to acquire network information of the preferred access network; and
accessing the preferred access network according to the network information.

11. The method according to claim 1 or 2, after the determining a preferred access network used by the service to be performed, further comprising:
if a connection to the preferred access network already exists, executing the performing the service by using the preferred access network; and
if the connection to the preferred access network does not exist, first establishing a connection to the preferred access network and then performing the service by using the preferred access network.

12. A terminal, comprising:
an information acquiring unit, configured to acquire service attribute information corresponding to a service to be performed;
a network selecting unit, configured to determine, according to the service attribute information and a network access selection policy, a preferred access network used by the service to be performed; and
a service executing unit, configured to perform the service by using the preferred access network.

13. The terminal according to claim 12, wherein:
the network access selection policy comprises: service attribute information and a preferred access network corresponding to the service attribute information; and
the network selecting unit is specifically configured to:
determine, according to the service attribute information, the preferred access network corresponding to the service attribute information.

14. The terminal according to claim 12 or 13, wherein the information acquiring unit comprises:
a receiving subunit, configured to receive a service link which is used to link the service and sent by an application server that is used to provide the service, wherein the service link comprises the service attribute information; and
a parsing subunit, configured to: when it is detected that the service link is triggered, parse the service link to obtain the service attribute information.

15. The terminal according to claim 12, 13, or 14, wherein the service attribute information acquired by the information acquiring unit comprises at least one of the following: a quality of service guarantee requirement, a mobility requirement, information about required service traffic, and an access mode preference.

16. The terminal according to claim 15, wherein the network access selection policy further comprises at least one of the following: current accounting status information of a user, and network status information.

17. The terminal according to claim 12 or 13, further comprising:
a policy configuring unit, configured to pre-configure and store the network access selection policy.

18. The terminal according to claim 12 or 13, further comprising:
a policy acquiring unit, configured to interact with an access network discovery and selection function entity or a capability enabling platform to acquire the network access selection policy.

19. The terminal according to claim 12 or 13, further comprising:
a selection prompting unit, configured to display selection prompt information if it is determined that the preferred access network is unavailable currently, wherein the selection prompt information is used to prompt a user of the service to choose whether to still use the preferred access network.

20. The terminal according to claim 19, wherein:
the network selecting unit is further configured to: if the user of the service chooses to still use the preferred access network, wait until the preferred access network is available and then instruct the service executing unit to perform the service by using the preferred access network.

21. The terminal according to claim 12 or 13, further comprising:
a network access unit, configured to interact with an access network discovery and selection function entity or a capability enabling platform to acquire network information of the preferred access network; and access the preferred access network according to the network information.

22. The terminal according to claim 12 or 13, wherein:
the service executing unit is specifically configured to: after the determining a preferred access network used by the service to be performed, if a connection to the preferred access network already exists, execute the performing the service by using the preferred access network; and is further configured to: when the connection to the preferred access network does not exist, first establish a connection to the preferred access network and then perform the service by using the preferred access network.
